# EUROPÄISCHE PATENTSCHRIFT

(11) **EP 3 909 894 B1**
(45) Veröffentlichungstag und Bekanntmachung des Hinweises auf die Patenterteilung: **18.10.2023**
(21) Anmeldenummer: 21173334.0
(22) Anmeldetag: 11.05.2021
(51) Int. Cl.: B65G 61/00, B65G 65/00

(54) **EINRICHTUNG, SYSTEM UND VERFAHREN ZUR LAGERUNG UND KOMMISSIONIERUNG VON GEGENSTÄNDEN**
DEVICE, SYSTEM AND METHOD FOR STORING AND PICKING ARTICLES
DISPOSITIF, SYSTÈME ET PROCÉDÉ DE STOCKAGE ET DE PRÉPARATION DE COMMANDES DES OBJETS

(30) Priorität: 12.05.2020 DE 102020112865
(43) Veröffentlichungstag der Anmeldung: 17.11.2021
(73) Patentinhaber: SSI Schäfer Automation GmbH (DE), 97232 Giebelstadt (DE)
(72) Erfinder: Herzmaier, Christian, 97076 Würzburg (DE); Muther, Matthias, 97348 Rödelsee (DE)
(74) Vertreter: Witte, Weller & Partner Patentanwälte mbB

(56) Entgegenhaltungen:
- EP-A1- 2 937 299
- EP-A2- 1 801 047
- WO-A1-2015/162182
- CN-A- 108 557 450
- CN-A- 110 844 165
- DE-U1-202017 103 210
- GB-A- 2 264 284
- US-A1- 2015 107 959

## Beschreibung

Die vorliegende Offenbarung betrifft das Gebiet der Handhabung (z.B. Lagern, Umsetzen, Kommissionieren, etc.) von gestapelten Gegenständen (z.B. Reifen oder Kisten), insbesondere von (Behälterstapeln, d.h. vertikal übereinander gestapelter (Transport-) Behälter, in der (Intra-) Logistik. Insbesondere betrifft sie ein Lager- und Kommissioniersystem und ein Verfahren zum Entstapeln.

In der vorliegenden Offenbarung versteht man unter einem "Stapel" 12 eine Gruppe von gleichartigen Gegenständen, die vertikal aufeinander geschichtet (d.h. in Schichten aufeinander gestapelt) sind. Die Gegenstände sind ordentlich, d.h. zueinander ausgerichtet, übereinander angeordnet. Der Stapel 12 ist also ein aufgeschichteter Stoß, der aus den gleichen Gegenständen besteht. Wenn der Stapel aus Behältern 16 gebildet wird, spricht man von einem "Behälterstapel" 12. Die Gegenstände haben eine Grundfläche, über die gestapelt wird. Es versteht sich, dass die Höhe der Gegenstände innerhalb eines Stapels unterschiedlich sein darf. Ferner versteht es sich, dass mehrere kleinere Gegenstände in einer Schicht des Stapels nebeneinander angeordnet werden können, so lange die Summe der (kleinen) Grundfläche die Grundfläche eines normalen Gegenstands ergeben. Die Gegenstände können beliebige geformte Grundflächen aufweisen, z.B. rechteckige oder runde, wobei sich die Gegenstände in einer orthogonalen, nahezu abstandslosen Anordnung in einer horizontalen Richtung berühren können sollten.

In der vorliegenden Offenbarung werden als Gegenstände bevorzugt Behälter 16 betrachtet. Ein "Behälter 16" ist ein stapelbarer Gegenstand, der in seinem Inneren einen Hohlraum aufweist, der insbesondere dem Zweck dient, den Hohlraum von der Umwelt zu trennen. Die Behälter 16 werden zur Aufbewahrung (Speicherung) unterschiedlicher Gegenstände für eine bestimmte Zeit verwendet. Die Behälter 16 werden verwendet, um die Gegenstände (z.B. Stückgüter, Artikel, Packeinheiten, Waren, etc.) zu sammeln und/oder zu ordnen. Die Behälter 16 können zur Speicherung von festen, aber auch flüssigen, Gegenständen eingerichtet sein.

Die Behälter 16 sind Ladehilfsmittel, die zusammen mit den darin befindlichen Gegenständen "Lagereinheiten" bilden, die auch zum Kommissionieren verwendet werden. Werden mehrere gleichartige Gegenstände, d.h. Gegenstände des gleichen Typs oder der gleichen Sorte, in einem der Behälter 16 gelagert, spricht man von einem "artikelreinen", "typreinen" oder "sortenreinen" Behälter 16.

Exemplarische Behälter 16 sind: Kartons, Tablare, Körbe (insbesondere mit umlaufenden Rand), Gitterboxen, Transportkisten (insbesondere aus Kunststoff) und Ähnliches. Die vorliegende Offenbarung ist auf alle Typen von Behältern anwendbar.

Da Paletten lediglich eine Aufnahmefläche, aber keinen umlaufenden Rand, aufweisen, stellen die Paletten eigentlich keine Behälter 16 im Sinne der oben angegebenen Definition dar. Dennoch können Paletten, die mit mehreren Schichten gleichartiger Einheiten beladen sind, auf die gleiche Weise gehandhabt werden wie der Behälterstapel 12. Deshalb umfasst der Begriff "Behälter" auch Paletten und andere Ladehilfsmittel, die übereinander gestapelt werden können oder die darauf gestapelte Gegenstände tragen.

Die Behälter 16 der vorliegenden Offenbarung zeichnen sich also insbesondere dadurch aus, dass sie "stapelfähig" sind. Stapelfähige Behälter 16 sind so ausgebildet, dass sie beim vertikalen Übereinanderschichten, z.B. mittels eines Formschlusses, vorzugsweise ineinander rasten, so dass die übereinander gestapelten Behälter 16 nicht mehr in einer horizontalen Richtung bewegbar sind. Innerhalb des Stapels 12 sind die Behälter 16 in diesem Fall ineinander fixiert und können aber in der vertikalen Richtung voneinander getrennt werden.

In der Intralogistik werden die Behälterstapel 12 in (Kommissionier-) Lagersystemen 10, bspw. Distributionszentren, eingesetzt. Diese (Behälterstapel-) Lagersysteme 10 werden z.B. in der Getränkeindustrie oder für die Verteilung von Backwaren, Frischeprodukten (z.B. Obst, Gemüse, Blumen, etc.) sowie in der Milchwirtschaft eingesetzt.

Die Behälterstapel 12 werden allgemein in sog. "Blocklagern" gelagert. In Blocklagern werden die einzelnen Lagereinheiten (Behälter) mehrfach hochgestapelt und insbesondere als ein einziger kompakter Block, also in direktem Kontakt nebeneinander, angeordnet.

Wenn die Lagereinheiten auf dem Boden, also nicht in Regalen, gelagert werden, spricht man allgemein von einem "Bodenlager" 14, wie es auch in der vorliegenden Offenbarung verwendet wird. Die Lagerung der Behälterstapel 12 auf dem Boden resultiert in einer sehr hohen Flächenbelegung (Anzahl von Behältern pro Einheitsfläche). Das Bodenlager 14 ist gut skalierbar und ermöglicht auch die Lagerung von unterschiedlich dimensionierten Behältern 16 (nebeneinander und ggf. auch übereinander, siehe oben). Ein guter Volumennutzungsgrad ist erreichbar.

In Bodenlagern 14 werden die Lagereinheiten (Behälterstapel 12) üblicherweise in Zeilen oder individuellen Blöcken (Stapeln) horizontal beabstandet zueinander auf dem Boden angeordnet, wodurch ein besserer Zugriff auf die einzelnen Lagereinheiten möglich ist. Die Lagereinheiten sind mit einem Mindestabstand (Spaltmaß) in der horizontalen Richtung zueinander beabstandet, um eine Interaktion mit einem (vorzugsweise umfänglich) von außen agierenden (Behälter-)Stapel-Lastaufnahmemittel 22 zu ermöglichen. Das Stapel-Lastaufnahmemittel 22 ist eingerichtet, einzelne der Gegenstände individuell und/oder mehrere gestapelte Gegenstände gleichzeitig und gemeinsam aufzunehmen. Aufgenommene Einzelgegenstände und Stapel aus Gegenständen können auf andere Einzelgegenstände oder Stapel aus Gegenständen gestapelt werden.

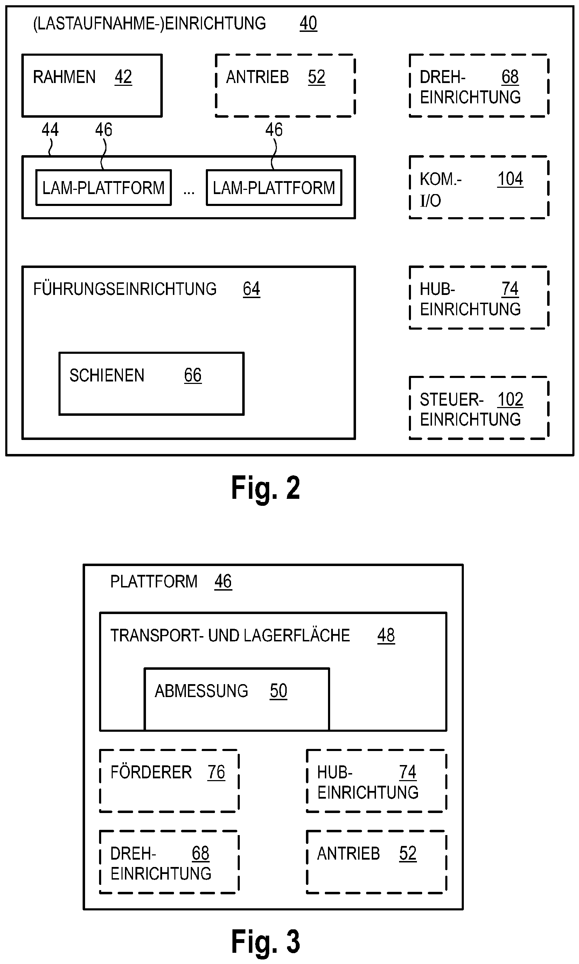

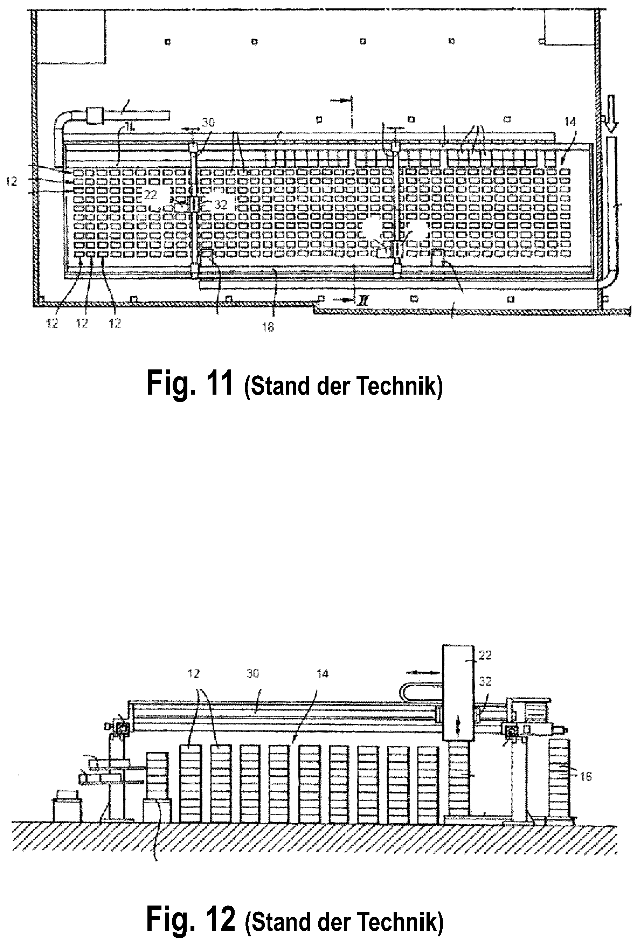

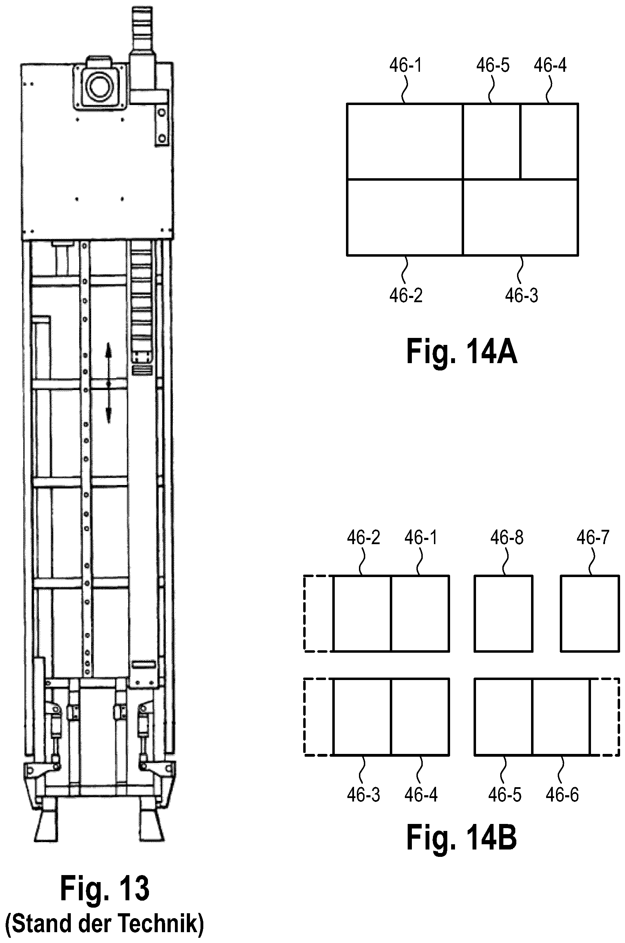

Ein (Behälter-) "Stapel-Lastaufnahmemittel" 22 ist eingerichtet, von oben (berührungslos) vertikal über den Behälterstapel 12 oder einen einzelnen Behälter 16 bewegt zu werden, den Behälterstapel 12 oder den einzelnen Behälter 16 aufzunehmen (d.h. von außen zu greifen), anzuheben, den angehobenen Behälterstapel 12 oder einzelnen Behälter 16 anschließend in der horizontalen Richtung zu bewegen und schließlich an einem Zielort wieder vertikal abzusenken und anschließend freizugeben (d.h. loszulassen). Ein konventionelles "Stapel-Lastaufnahmemittel" 22, das auch für die vorliegende Offenbarung verwendbar ist, ist z.B. in der EP 0 767 113 B1 (vgl. dort Fig. 3) beschrieben, siehe vorliegende Fig. 13. In den Fig. 2 und 3 dieses Dokuments ist das oben erwähnte herkömmliches Behälterstapel-Bodenlager 14 gemäß den vorliegenden Fig. 11 und 12 gezeigt, das hinsichtlich des grundsätzlichen Aufbaus auch bei der vorliegenden Offenbarung eingesetzt wird.

Das Stapel-Lastaufnahmemittel 22 ist eine Greifeinheit eines Roboters 20, die die Behälterstapel 12 von außen (um)greift, um die Behälterstapel 12 von einem Startort zu einem Zielort zu bewegen. Der Roboter 20 wird also vorzugsweise zum Kommissionieren von Behälterstapeln 12 (d.h. zum Sammeln von unterschiedlichen Artikeln gemäß Kommissionieraufträgen) eingesetzt. Der Startort kann ein Lagerort im Bodenlager 14 sein. Der Zielort kann eine Fördertechnik 18 sein, die den Behälterstapel 12 z.B. in einen anderen Funktionsbereich des Systems 10 (z.B. Einzelkommissionierung, Auftragskonsolidierung, Versand, etc.) transportiert. Es versteht sich, dass der Roboter 20 auch zum Auffüllen des Bodenlagers 14 benutzt werden kann.

Nachteilig ist im Stand der Technik, dass aufgrund der horizontal beabstandeten Lagerung der Behälterstapel 12 im Bodenlager 14 - im Vergleich z.B. zu einem kompakten Blocklager, wo die Lagereinheiten ohne Abstand als ein einheitlicher Block gelagert werden, nicht optimal ist. Der Flächenbedarf ist höher als in einem Blocklager.

Ein genereller Nachteil bei der Handhabung von Behälterstapeln 12 ist darin zu sehen, dass sich eine Transportsicherheit der Stapel 12 in der horizontalen Richtung mit einer zunehmenden Höhe des Stapels 12 verschlechtert. Je höher der Stapel 12 ist, desto geringer ist die horizontale Transportgeschwindigkeit, weil Beschleunigungen, die z.B. beim Anfahren, Stoppen oder während einer Kurvenfahrt auftreten, den Stapel 12 zum Einsturz bringen können. Beschleunigungskräfte werden in den untersten Behälter 16 des Stapels 12 eingeleitet und pflanzen sich nach oben zum obersten Behälter 16 fort. Der Stapel 12 kann derart ins Schwanken (Resonanz) geraten, dass der Stapel 12 kollabiert. Dies gilt es zu verhindern. Deshalb werden die Stapel 12 üblicherweise mit einer geringeren Höhe transportiert, als es z.B. eine (Boden-)Tragfähigkeit der individuellen Behälter 16 innerhalb des Stapels 12 zulassen würde. EP2937299A1 offenbart ein System gemäß dem Obergriff des Anspruchs 1 und ein Verfahren gemäß dem Oberbegriff des Anspruchs 10.

Das Dokument DE 20 2017 103 210 U1 betrifft gemäß seinem Titel ein Nutzfahrzeug mit einer beweglichen Ladeplattform. Die Ladeplattform des Nutzfahrzeugs ist entlang einer Längsrichtung des Fahrzeugs in zwei Hälften geteilt, die in einer Querrichtung auseinander bewegbar sind, wobei eine Fläche von jeder der Ladeplattformhälften so dimensioniert ist, dass eine, aus mehreren nebeneinander angeordneten Paletten bestehende, Stapelreihe darauf positionierbar ist.

Daher ist es eine Aufgabe, die Handhabung, insbesondere die Lagerung, Kommissionierung und/oder den Transport, der Stapel aus Gegenständen zu verbessern. Vorzugsweise soll der Volumennutzungsgrad im Lager verbessert werden. Weiter ist es wünschenswert, einen Transport-Durchsatz (Anzahl transportierter Behälter pro Zeiteinheit) zu erhöhen.

Diese Aufgabe wird gelöst durch ein Lager- und Kommissioniersystem gemäß Anspruch 1.

Die Plattformen sind horizontal beweglich. Die Plattformen können zwischen einer ersten offenen Stellung und einer zweiten geschlossenen Stellung hin- und her bewegt werden. In der ersten offenen Stellung steht ausreichend Raum zur Verfügung, um ein automatisiertes Stapel-Lastaufnahmemittel, das die (Behälter-)Stapel außen umfänglich greift, zwischen benachbarte Stapel zu bewegen, die auf den Plattformen gelagert sind. In der zweiten geschlossenen Stellung können die gelagerten Stapel aber derart zusammengefahren und verdichtet werden, dass kein Raum mehr zwischen benachbarten Stapeln vorhanden ist.

Die benachbarten Stapel berühren sich in der zweiten geschlossenen Stellung und stabilisieren sich so gegenseitig. Dies ermöglicht es, dass in der zweiten geschlossenen Stellung Stapel mit einer größeren Gesamthöhe transportiert werden können. Von außen wirkende (Beschleunigungs-)Kräfte können die Stapel nicht kollabieren lassen, weil sich die Stapel gegenseitig stützen. Alternativ können niedrigere Stapel als Gruppe mit einer höheren Geschwindigkeiten bewegt werden. Beides resultiert in einer Leistungs- bzw. Durchsatzsteigerung beim Transport von Stapeln.

Die Handhabung der Gegenstände wird verbessert. Die Gegenstände werden produktschonend gehandhabt. Eine Anzahl von Handhabungen der Gegenstände wird auf ein Minimum reduziert, so dass der Inhalt der Gegenstände geschont wird.

Wenn die Einrichtung im Bodenlager eingesetzt wird, erhöht sich der Volumennutzungsgrad. Die Einrichtung wird auf den Boden des Bodenlagers platziert und kann zwischen den beiden Stellungen hin- und her bewegt werden. Im normalen Lagerzustand befinden sich die Einrichtungen in der zweiten geschlossenen Stellung. Die gelagerten Stapel stehen dicht und vorzugsweise in Kontakt beisammen. Es können mehr Stapel pro Einheitsfläche gelagert werden als in einem gewöhnlichen Bodenlager (vgl. Fig. 11 und 12), wo die Behälter horizontal in allen Richtungen zueinander beabstandet sein müssen. Wenn auf einen gelagerten Stapel zugegriffen werden muss, kann die entsprechende Einrichtung aktiviert werden, um zumindest die Plattform in die erste geöffnete Stellung zu bewegen, wo der gewünschte Stapel gelagert ist. In der geöffneten Stellung steht ausreichend Raum für das Stapel-Lastaufnahmemittel zur Verfügung, um von oben über den gelagerten Stapel vertikal abgesenkt zu werden und den Stapel anschließend umfänglich von außen zu greifen.

Auf diese Weise wird der zur Verfügung stehende Lagerraum effektiver genutzt. Bildlich gesprochen wird die Luft aus dem Lager zwischen den üblicherweise beabstandet gelagerten Stapeln entfernt.

Vorzugsweise sind die Plattformen in der ersten offenen Stellung so horizontal zueinander beabstandet, dass das automatisierte Stapel-Lastaufnahmemittel, das eingerichtet ist, die Stapel von außen zu greifen, sicher kollisionsfrei zwischen die auf den Plattformen angeordneten Stapel bewegbar ist, und die Plattformen sind in der zweiten geschlossenen Stellung so horizontal zueinander angeordnet, dass die auf den Plattformen angeordneten Stapel im Wesentlichen abstandsfrei angeordnet sind. Im Wesentlichen abstandsfrei bedeutet, dass sich Stapel vorzugsweise berühren. Aufgrund von Toleranzen ist die gegenseitige Berührung aber nicht immer gewährleistet.

Die abstandsfreie Anordnung drückt sich also dadurch aus, dass sich die Stapel im Lagerzustand gegenseitig berühren und stabilisieren. Nur wenn auf einen der Stapel zugegriffen werden muss, werden die Stapel auseinanderbewegt. Das Auseinanderbewegen findet kurz vor dem Zugriff (z.B. kurz vor dem Erreichen eines Zielorts), d.h. ohne Zeitverlust, statt.

Insbesondere weist die Einrichtung mindestens einen Antrieb auf, der eingerichtet ist, die Plattformen zwischen der ersten Stellung und der zweiten Stellung zu bewegen, wobei insbesondere für jede der Plattformen ein separater Antrieb vorgesehen ist.

Der Antrieb der Plattformen ist in diesem Fall in die Einrichtung integriert. Die Einrichtung kann autark betrieben werden. Die Einrichtung kann insbesondere als Bodenplatte in einen Bodenlager eingesetzt werden, wobei die Einrichtung zwischen dem Boden und dem Stapel positioniert wird.

Bei der Ausgestaltung, wo jede Plattform einen eigenen Antrieb hat, ist es insbesondere möglich, einzelne Plattformen der Einrichtung individuell zwischen den beiden Stellungen zu bewegen, ohne dass die restlichen Plattformen ebenfalls bewegt werden. Dies ermöglicht es, nur den Stapel bzw. nur die Plattform zu bewegen, auf die zugegriffen werden muss.

Weiter ist es von Vorteil, wenn der Rahmen eine Führungseinrichtung, für die Plattformen, insbesondere für jede der Plattformen, aufweist, um die Plattformen entlang fest vorgegebener Bewegungswege (relativ zum Rahmen) zwischen der ersten und zweiten Stellung zu bewegen.

Die Plattformen werden also geführt bewegt. Auf diese Weise können Kollisionen zwischen den Plattformen sowie ein Verkeilen den Plattformen verhindert werden. Die Bewegung der Plattformen erfolgt so, dass sich die Plattformen nicht gegenseitig blockieren. Auf diese Weise wird eine hohe Funktionszuverlässigkeit sichergestellt.

Bei einer besonderen Ausgestaltung weist die Einrichtung ferner eine Hubeinrichtung auf, die eingerichtet ist, einzelne oder jede der Plattformen, insbesondere in deren ersten Stellung, vertikal zu bewegen.

Die Hubeinrichtung ermöglicht es, gelagerte Stapel zur Vereinfachung eines Zugriffes von außen anzuheben. Zum Beispiel im Bereich der manuellen Kommissionierung greifen Menschen auf die Behälter des Stapels zu und entleeren die Behälter von oben nach unten. Je tiefer sich der Mensch vorarbeitet, desto tiefer muss sich der Mensch bücken. Die Hubeinrichtung kann tieferliegende Behälter in eine ergonomisch günstige Höhe anheben.

Dies gilt aber nicht nur für eine Interaktion mit Menschen. Auch eine Interaktion mit Maschinen kann es erforderlich machen, dass der Stapel oder der oberste Gegenstand eines Stapels in eine gewünschte Höhe verbracht wird. Dieses Problem wird durch die Hubeinrichtung gelöst.

Auch ist es möglich, dass die Einrichtung ferner eine Dreheinrichtung aufweist, um einzelne der Plattformen oder alle Plattformen um eine vertikale Achse zu drehen. Eine Drehrichtung kann beliebig gewählt werden.

Die Drehung der Stapel, die auf den Plattformen gelagert sind, ermöglicht z.B. eine Sequenzierung. Geht man davon aus, dass nur von einer bestimmten Seite auf die Stapel zugegriffen werden kann, die auf der Einrichtung positioniert sind, ermöglicht es die Dreheinrichtung, eine Reihenfolge der Zugriffe festzulegen. Der Stapel, auf den zuerst zugegriffen werden soll, wird zur Handhabungsseite gedreht. Danach wird der nächste Stapel auf diese Seite gedreht usw.

Die Drehung der gelagerten Stapel kann auch während eines Transports der Einrichtung erfolgen, also während sich die Einrichtung (in der zweiten Stellung der Plattformen) bewegt, so dass an einem Zielort direkt von der Handhabungsseite her auf den gewünschten Stapel zugegriffen werden kann.

Insbesondere ist eine Fläche von jeder der Plattformen im Wesentlichen gleich groß wie eine Grundfläche von einem einzigen der Stapel oder ein ganzzahliges Vielfaches davon.

Die analoge Dimensionierung der Flächen verbessert den Volumennutzungsgrad, insbesondere wenn die Einrichtung als Bodenplatte im Bodenlager benutzt wird.

Wenn die Einrichtung im Bereich der Fördertechnik - als Transportplatte bzw. Ladungsträger für Stapel - eingesetzt wird, können mehr Gegenstände pro Zeiteinheit transportiert werden.

Die Herstellungskosten der Ladungsträger verringern sich, weil insgesamt weniger Träger als bei einem Individualtransport benötigt werden.

Vorzugsweise umfasst die Einrichtung genau vier Plattformen, die insbesondere eine rechteckige Fläche definieren.

Vier Plattformen sind einfach relativ zueinander zu bewegen.

Die Behälter können so dimensioniert werden, dass vier nebeneinander angeordnete Behälter die Grundfläche einer Palette bilden. In diesem Fall können die Behälter, die einer Zielpalette zugeordnet sind, gleichzeitig als Einheit gehandhabt werden.

In der zweiten geschlossenen Transportstellung stützen sich die vier gelagerten Stapel optimal in allen Transportrichtungen wechselseitig.

Auch wird die Aufgabe durch ein Verfahren zum Entladen von Stapeln gemäß Anspruch 10 gelöst.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar,

Ausführungsbeispiele der vorliegenden Offenbarung sind in den Zeichnungen dargestellt und werden in der nachfolgenden Beschreibung näher erläutert.
- Fig. 1: zeigt eine perspektivische Ansicht eines Ausschnitts eines Lager- und Kommissioniersystems mit einem Bodenlager und einem Portal-Roboter;
- Fig. 2: zeigt ein Blockdiagramm einer (Lastaufnahme-)Einrichtung;
- Fig. 3: zeigt ein Blockdiagramm einer (Lastaufnahme-)Plattform;
- Fig. 4: zeigt eine Draufsicht auf eine Einrichtung in einer ersten offenen Stellung (Fig. 4A) und in einer zweiten geschlossenen Stellung (Fig. 4B);
- Fig. 5: zeigt einen Bewegungsablauf für Plattformen zwischen der zweiten Stellung und der ersten Stellung in einer Draufsicht;
- Fig. 6: zeigt jeweils in einer Draufsicht die zweite geschlossene Stellung (Fig. 6A) und die erste offene Stellung (Fig. 6B), wo bei eine der Plattformen isoliert bewegt wird;
- Fig. 7: zeigt eine Draufsicht auf eine Einrichtung mit vier Plattformen, von denen lediglich drei Plattformen beweglich gelagert sind;
- Fig. 8: veranschaulicht eine Drehfunktion der Einrichtung;
- Fig. 9: veranschaulicht eine Hubfunktion in verschiedenen Ausgestaltungen;
- Fig. 10: zeigt ein Flussdiagramm zum Beladen und/oder Entladen von Stapeln auf/von Plattformen der Einrichtung;
- Fig. 11: zeigt eine Draufsicht auf ein konventionelles Behälterstapel-Bodenlager;
- Fig. 12: zeigt eine Seitenansicht der Fig. 11;
- Fig. 13: zeigt eine Seitenansicht eines konventionellen Stapel-Lastaufnahmemittels; und
- Fig. 14: zeigt eine Draufsicht auf eine weitere Einrichtung mit fünf Plattformen in einer geschlossenen Stellung (Fig. 14A) und zwei offenen Stellungen (Fig. 14B).

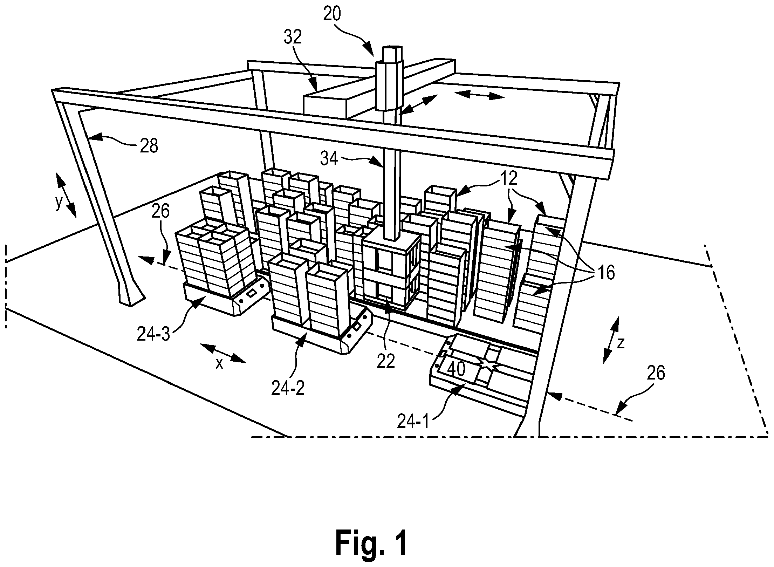

Fig. 1 zeigt eine perspektivische Ansicht eines Ausschnitts eines System 10, das zur Handhabung (insbesondere Lagerung und Kommissionierung) von (Behälter-)Stapeln 12 eingerichtet ist. Die nachfolgenden Ausführungen gelten allgemein für stapelbare Gegenstände und werden speziell am Beispiel von Behältern 16 erläutert. Das gleiche gilt für die Stapel 12, die vorzugsweise aus den Behältern 16 gebildet werden.

Das System 10 weist ein (kompaktes) Bodenlager 14 auf, wo die Behälterstapel 12 (direkt oder indirekt) auf einem Boden indoor und/oder outdoor gelagert werden. In der Fig. 1 ist eine Variante des Bodenlagers 14 gezeigt, wo die Behälterstapel 12 sowohl in einer horizontalen Längsrichtung X als auch in einer horizontalen Querrichtung Z relativ zueinander beabstandet sind analog zur Anordnung der Fig. 11 und 12. Die Längsrichtung X, die Querrichtung Z und die Höhenrichtung Y bilden ein kartesisches Koordinatensystem. Es versteht sich, dass die Stapel 12 nur in einer der horizontalen Richtungen X oder Z zueinander beabstandet sein müssen. Das hängt vom Stapel-Lastaufnahmemittel 22 ab, wie es später noch beschrieben werden wird.

Die Behälterstapel 12 werden allgemein aus einzelnen Behältern 16 gebildet, die in einer Höhenrichtung Y vertikal übereinandergestapelt sind, wie eingangs bereits beschrieben.

Das System 10 weist ferner eine Fördertechnik 18 und einen (Handhabungs-)Roboter 20 mit dem von außen greifenden Stapel-Lastaufnahmemittel 22 auf, wie es exemplarisch in den Fig. 11 bis 13 gezeigt ist. Das Lastaufnahmemittel 22 kann eingerichtet sein, in alle vier Außenseiten des Behälters 16 - also vollumfänglich - einzugreifen.

Alternativ kann das Lastaufnahmemittel 22 auch eingerichtet sein, in nur einige Außenseiten, insbesondere sich gegenüberliegende Außenseiten, des Behälters 16 einzugreifen, wobei die Stapel 12 dann in Zeilen gelagert werden können, was nicht in den Fig. 11 und 12 gezeigt ist.

Die Fördertechnik 18 kann durch stationäre durchgehend angeordnete Förderer (z.B. Rollenförderer, Bandförderer, Kettenförderer, (Elektro-)Hänge- oder Bodenbahnen, etc.) und (bodengebundene) bewegliche Förderfahrzeuge (fahrerlose Transportfahrzeuge), automatisiert geführte Fahrzeuge (AGVs), (schienengeführte) Verschiebewägen und dergleichen implementiert sein.

In der Fig. 1 sind exemplarisch drei fahrerlose Transportfahrzeuge (FTF) 24-1 bis 24-3 gezeigt, die entlang eines Transportwegs 26 (vgl. Strichlinie) bewegt werden, der eine Förderstrecke bildet. Die FTF 24 werden in der Fig. 1 von rechts nach links entlang des Transportwegs 26 bewegt.

Die fahrerlosen FTF 24 sind autonom verfahrbar. Dies bedeutet, dass die FTF 24 ohne menschliche Interaktion von einer (nicht dargestellten) Steuerung durch das System 10 geführt werden. Wenn die Führung entlang einer Zwangsführung (z.B. Induktionsschleifen) erfolgt, kann die Steuerung außerhalb des Fahrzeugs 24 angeordnet sein und zentral erfolgen. Wenn das Fahrzeug 24 vollständig autonom, d.h. ohne Zwangsführung, durch das System 10 bewegt wird, indem das Fahrzeug unbekannte und unerwartete Hindernisse selbstständig umfährt, ist die Steuerung vorzugsweise in das Fahrzeug integriert. Ferner weist das Fahrzeug 24 in diesem Fall entsprechende Sensoren auf, um seine eigene Position und die Positionen der Hindernisse innerhalb des Systems 10 bestimmen zu können, um selbstständig einen Weg durch das System 10 von einem vorgegebenen Startpunkt zu einem vorgegebenen Endpunkt bei Kenntnis des Layouts des Systems 10 zu finden. In diesem Fall sind die Transportwege 26 nicht fest vorbestimmt, sondern werden situationsabhängig vom Fahrzeug 24 selbst angepasst. Hier ist war die Gefahr eines Stapelkollaps besonders groß, weil Ausweichbewegungen ruckartig und unvorhersehbar erfolgen.

Der Roboter 20 ist in Fig. 1 exemplarisch als beweglicher Portalroboter mit einem stationären Portal (d.h. Gestell) 28 implementiert. In diesem Fall umfasst der Roboter 20 einen in der X-Richtung (oder Z-Richtung) beweglichen Tragbalken 30. Am Tragbalken 30 ist ein in der Querrichtung Z (oder in X) beweglicher Schlitten 32 vorgesehen. Ein vertikal beweglicher Mast 34 kann an den Schlitten 32 koppeln. Der Mast 34 ist mit dem Stapel-Lastaufnahmemittel 22 verbunden oder weist dieses auf, so dass jeder der gelagerten Behälterstapel 12 für den Roboter 20 erreichbar ist.

Es versteht sich, dass anstatt eines Portalroboters 20 auch jeder andere Robotertyp (wie z.B. ein verfahrbarer Knickarmroboter) mit dem entsprechenden, vertikal agierenden Stapel-Lastaufnahmemittel 22 eingesetzt werden könnte.

Ferner umfasst das System 10 mindestens eine Einrichtung 40, die zur gleichzeitiger Aufnahme einer Vielzahl der Behälterstapel 12 eingerichtet ist, die horizontal nebeneinander positioniert werden. Die Einrichtung 40 kann (stationär) im Bodenlager 14 (nicht gezeigt) und/oder dynamisch auf der Fördertechnik 18 eingesetzt werden.

Im System 10 der Fig. 1 sind die FTF 24 jeweils mit einer Einrichtung 40 ausgerüstet. Die Einrichtungen 40 sind auf einer Oberseite der FTF 24 im Sinne eines "Lastaufnahme-Decks" angeordnet.

Nicht in der Fig. 1 gezeigt ist, dass die Einrichtungen 40 können auch auf dem Boden des Bodenlagers 14 als stationäre Lager- bzw. Bodenplatten eingesetzt werden können, um den Volumennutzungsgrad innerhalb des Bodenlagers 14 (nicht gezeigt) zu verbessern.

Ferner könnten die Einrichtungen 40 als auch transportable Ladungsträger auf einem Stetigförderer (nicht gezeigt) eingesetzt werden, ähnlich wie Tablare oder Transportkisten in der konventionellen Lager- und Kommissioniertechnik.

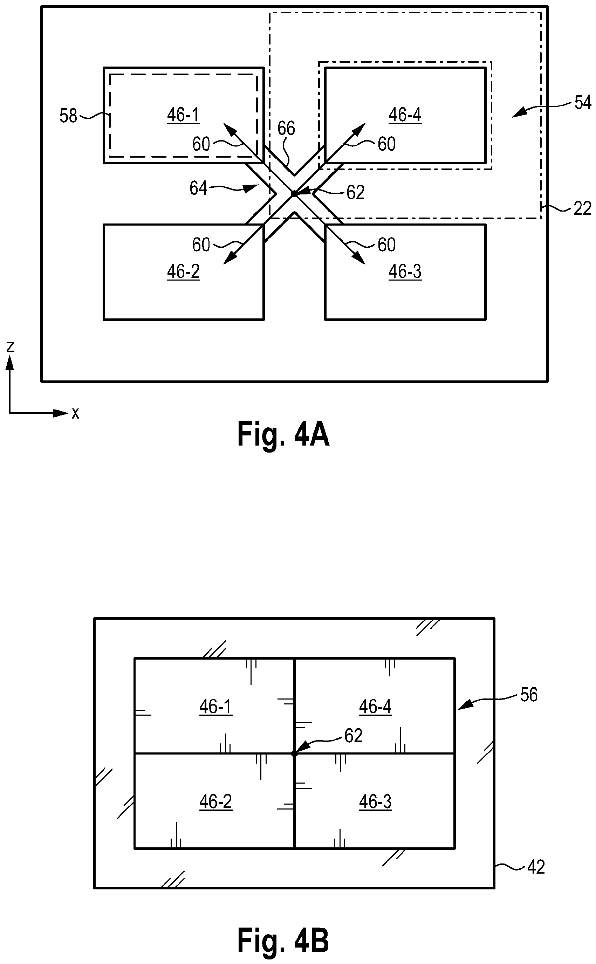

Fig. 2 zeigt ein Blockdiagramm der Lastaufnahme-Einrichtung 40. Die Einrichtung 40 umfasst einen Rahmen 42 und eine Vielzahl 44 von (Lastaufneh-me-)Plattformen 46. Die Plattformen 46 sind beweglich mit dem Rahmen 42 verbunden. Die Plattformen 46 sind zwischen einer ersten offenen Stellung 54 (vgl. Fig. 4A) zur Be- und Entladung der Plattformen 46 sowie einer zweiten geschlossenen Stellung 56 (vgl. Fig. 4B) zum (horizontalen) Transport der Behälterstapel 12 eingerichtet. Unter einem "horizontalen" Transport ist ein Transport in der Ebene der Fördertechnik 18 zu verstehen, in der die Fördertechnik 18 angeordnet ist. Dies bedeutet, dass ein horizontaler Transport nicht nur entlang einer waagerechten Linie erfolgen kann, sondern auch entlang von ansteigenden oder abfallenden Förderlinienabschnitten.

Jede der Plattformen 46 definiert eine Transport- und Lagerfläche 48 (vgl. Fig. 3), deren Abmessung 50 an eine Abmessung (Grundfläche oder ganzzahliges Vielfaches) der Behälter 16 und insbesondere an den Behälterboden angepasst ist. Dies bedeutet, dass die Fläche 48 der Plattformen 46 im Wesentlichen so groß wie die Grundfläche eines einzelnen Behälters 16 ist. Mit noch anderen Worten bedeutet dies, dass eine Länge und Breite der Fläche 48 im Wesentlichen einer Länge und Breite einer Grundfläche eines einzelnen Behälters 16, und damit auch eines einzelnen Behälterstapels 12, entspricht.

Wie in Fig. 2 gezeigt, kann jede der Einrichtungen 40 einen Antrieb 52 umfassen, um die Plattformen 46 zwischen der ersten Stellung 54 und der zweiten Stellung 56 zu bewegen, wie es nachfolgend noch näher erläutert werden wird. Der Antrieb 52 kann z.B. durch einen Motor (nicht gezeigt) implementiert werden, der einen oder mehrere Zahnriemen (nicht gezeigt) antreibt, die mit den Plattformen 46 verbunden, wie man es z.B. von teleskopierbaren Elementen (z.B. Zinken oder Greifarmen) konventioneller Lastaufnahmemittel kennt.

Der Antrieb 52 ist für die Einrichtung 40 optional. Der Antrieb 52 zum Relativbewegen der Plattformen 46 kann auch in die Fördertechnik 18 integriert sein. Der Antrieb 52 kann z.B. ein Motor (nicht gezeigt) sein, der Teil des FTF 24 (vgl. Fig. 1) ist und der die Plattformen 46 mit antreibt, die auf der Oberseite des FTF 24 angeordnet sind.

Der Antrieb 52 ist aber immer dann ein Bestandteil der Einrichtung 40, wenn die Einrichtung 40 als selbstständige Einheit (stand-alone unit), wie z.B. als Ladungsträger auf einem Stetigförderer oder als Bodenplatte im Bodenlager 14, eingesetzt wird. Es versteht sich, dass in diesem Fall ferner eine Energiespeichereinheit (nicht gezeigt) vorgesehen ist.

Ferner versteht es sich, dass jede der Plattformen 46 mit einem separaten Antrieb 52 ausgerüstet sein kann. Dies hat den Vorteil, dass jede der Plattformen 46 individuell zwischen den Stellungen bewegt werden kann.

Unter Bezugnahme auf Fig. 4 werden nachfolgend die erste offene Stellung 54 (vgl. Fig. 4A) und die zweite geschlossene Stellung 56 (vgl. Fig. 4B) näher erläutert. Die Fig. 4A und 4B zeigen Draufsichten auf eine schematisch isoliert dargestellte Einrichtung 40, die exemplarisch vier als Rechteck angeordnete Plattformen 46-1 bis 46-4 umfasst. Es versteht sich, dass die Einrichtung 40 mehr oder weniger Plattformen 46 aufweisen kann. Vorzugsweise werden vier Plattformen 46 eingesetzt, weil sich die Stapel 12 (nicht gezeigt) dann in der zweiten (Transport-) Stellung 56 gegenseitig stützen können. Ferner versteht es sich, dass die Plattformen 46 auch in anderen Geometrien anordenbar sind, z.B. linien- bzw. zeilenförmig oder L-förmig.

In der Fig. 4A ist die erste geöffnete Stellung 54 zum Beladen und Entladen der Plattformen 46 gezeigt. In der ersten Stellung 54 der Fig. 4A sind alle Plattformen 46 in den horizontalen Richtungen X und Z derart relativ zueinander beabstandet, dass das Stapel-Lastaufnahmemittel 22, dessen Umrisse (vertikale Projektion) in der Fig. 4A mit einer strichpunktierten Linie angedeutet ist, die Behälterstapel 12 von den Plattformen 46 aufnehmen oder auf die Plattformen 46 absetzen kann, indem das Stapel-Lastaufnahmemittel 22 horizontal über der jeweiligen Plattform 46 zentriert positioniert wird und anschließend vertikal abgesenkt und wieder angehoben wird.

In der zweiten Stellung 56 der Fig. 4B weisen die Plattformen 46 keinen horizontalen Abstand zueinander auf. Wenn die Plattformen 46 in der zweiten geschlossenen Stellung 56 jeweils mit einem Behälterstapel 12 beladen sind (nicht dargestellt), dann berühren sich die direkt benachbarten Behälterstapel 12 vorzugsweise. In diesem Fall sind die Behälterstapel 12 kompakt, d.h. dicht und ohne Zwischenraum, auf der Einrichtung 40 angeordnet.

In der zweiten Stellung 56 stabilisieren sich die Behälterstapel 12 gegenseitig. Wenn Kräfte von außen auf die Behälterstapel 12 einwirken, wie es während des Transports der beladenen Einrichtung 40 durch das System 10 mittels der Fördertechnik 18 passiert, geraten die Behälterstapel 12 weniger leicht bis gar nicht ins Schwanken. Ein Aufschaukeln der Behälterstapel 12 wird vermieden. Die Behälterstapel 12 können während des Transports größere Höhen als üblich aufweisen, ohne zu kollabieren. Auf diese Weise erhöht sich die Transportleistung des Systems 10.

Es können also entweder mehr Behälter 16 gleichzeitig mit einer konstanten Fördergeschwindigkeit durch das System 10 bewirkt werden, weil die Stapel 12 höher sein dürfen. Alternativ und ergänzend können eine gleichbleibende Anzahl von Behältern 16, bei konstanter gewöhnlicher Höhe, mit höheren Geschwindigkeiten durch das System 10 transportiert werden.

Um die Plattformen 46 beladen und entladen zu können, werden die Plattformen 46 zwischen der zweiten geschlossenen Stellung 56 (Fig. 4B) und der ersten geöffnete Stellung 54 mittels des Antriebs 52 bewegt. Die Bewegung resultiert in einer Abstandsänderung zwischen den Plattformen und erfolgt entlang vorgegebener Wege, die in der Fig. 4A durch Pfeile 60 angedeutet sind. Diese (Bewegungs-) Wege 60 beginnen vorzugsweise in einem (gemeinsamen) Punkt 62 und erstrecken sich, vorzugsweise geradlinig soweit, dass die in der Fig. 4A gezeigte erste Stellung 54 erreichbar ist.

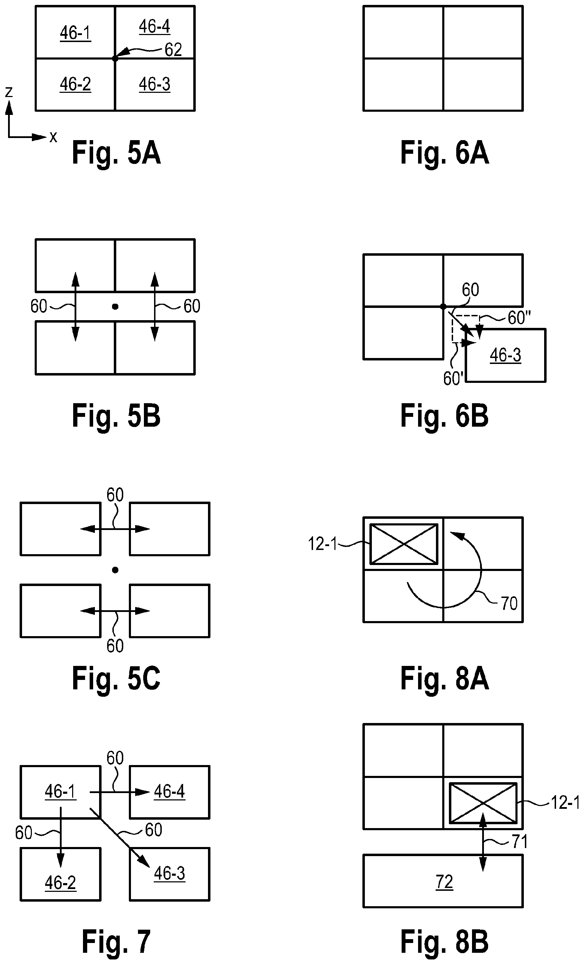

Es versteht sich, dass die Plattformen 46 auch entlang anders orientierter Wege 60 bewegt werden können. So ist es z.B. möglich, dass die Plattformen 46 zuerst in der Querrichtung Z paarweise auseinandergefahren werden, um dann in der Längsrichtung X paarweise auseinandergefahren zu werden, um die in der Fig. 4A gezeigte erste Stellung 54 zu erreichen, vgl. auch Fig. 5.

Ferner versteht es sich, dass die Bewegungen der Plattformen 46 vorzugsweise synchron erfolgen. Je nach Ausführung der zugehörigen Führungseinrichtung 64, die in der Fig. 4 z.B. als kreuzförmige Schiene 66 implementiert ist, d.h. insbesondere in Abhängigkeit vom Verlauf der Wege 60, können die Plattformen 46 auch unabhängig, z.B. nacheinander, in die Positionen der Fig. 4A bewegt werden.

Die Bewegungen der Plattformen 46 erfolgt vorzugsweise bevor die Behälterstapel 12 gehandhabt werden, so dass z.B. der Roboter 20 nicht warten muss.

Die Draufsicht der Fig. 4A dient auch einer Veranschaulichung der Raumverhältnisse. Wie bereits oben erwähnt, sind die Abmessungen 50 der Plattformen 46 so gewählt, dass die Fläche 48 der Plattformen 46 nahezu identisch zur Grundfläche 58 eines Stapels 12 bzw. eines Behälters 16 ist. Die Plattformen 46 sind in den horizontalen Richtungen X und Z derart weit zueinander beabstandet, dass das Stapel-Lastaufnahmemittel 22, dessen Grundfläche in der Fig. 4A von den strichpunktierten Linien eingeschlossen ist, kollisionsfrei zwischen benachbarte Plattformen 46 vertikal abgesenkt und angehoben werden kann.

Die Führungseinrichtung 64 ist Teil der Einrichtung 40 und kann z.B. aus den Schienen 66 gebildet werden, vgl. Fig. 2. Die Führungseinrichtung 64 ist mit dem Rahmen 42 verbunden. Die Führungseinrichtung 64 stellt sicher, dass die Plattformen 46 beim Auseinanderfahren und Zusammenfahren sich nicht gegenseitig behindern.

Die Fig. 5 und 6 veranschaulichen schematisch verschiedene Möglichkeiten die (exemplarischen vier) Plattformen 46 zwischen der ersten und zweiten Stellung 54 und 56 zu bewegen. Die Fig. 5 und 6 zeigen Draufsichten auf jeweils eine Einrichtung 40, die unterschiedlich ausgestaltete Führungseinrichtung 64 (nicht dargestellt) umfassen.

Fig. 5A zeigt die zweite geschlossene (Transport-)Stellung 56 für vier Plattformen 46. Fig. 5B zeigt einen ersten Schritt des Auseinanderbewegens der Plattformen 46. Die Plattformen 46 werden paarweise z.B. in der Querrichtung Z auseinanderbewegt. Die Plattformen 46-1 und 46-4 bilden ein erstes Paar. Die Plattformen 46-2 und 46-3 bilden ein zweites Paar. Anschließend werden die Paare der Plattformen 46 auch noch in der Längsrichtung X in die erste offene (Be- und Entlade-)Stellung 54 bewegt zu werden, vgl. Fig. 5C.

Die in der Fig. 5 gezeigten Bewegungen (vgl. Doppelpfeile) können gleichzeitig, nacheinander oder in umgekehrter Reihenfolge (X und Z) erfolgen. Die Bewegungen können erfolgen, während die Einrichtung 40 selbst (z.B. auf der Fördertechnik 18 oder mit dem FTF 24) bewegt wird.

Die Fig. 6 zeigt eine Einrichtung 40, die eingerichtet ist, ihre Plattformen 46 individuell zu bewegen. Die Fig. 6A zeigt eine Draufsicht auf die schematisch dargestellte zweite geschlossene Stellung 56. Die Fig. 6B zeigt die Einrichtung 40 der Fig. 6A, wobei die Plattformen 46-3 isoliert in ihre erste Stellung 54 verfahren ist. Die restlichen Plattformen 46-1, 46-2 und 46-4 verbleiben in der zweiten geschlossenen Stellung 56. Es versteht sich, dass jede der Plattformen 46 der Fig. 6 individuell in ihre erste geöffnete Stellung 56 bewegt werden kann.

Fig. 7 veranschaulicht eine Einrichtung 40 in ihrer ersten geöffneten Stellung 54, die wiederum exemplarisch nur vier Plattformen 46-1 bis 46-4 aufweist. Bei der Einrichtung 40 der Fig. 7 ist z.B. die erste Plattform 46-1 stationäre gelagert, wohingegen die restlichen drei Plattformen 46-2 bis 46-4 beweglich gelagert sind. Entsprechende Bewegungspfeile sind in der Fig. 7 angedeutet, um die Plattformen 46 aus ihrer geschlossenen zweiten Stellung (nicht gezeigt) in die gezeigte erste offene Stellung 54 zu bewegen.

Fig. 8 zeigt eine Draufsicht auf eine schematisch dargestellte Einrichtung 40 mit vier Plattformen 46. Die Einrichtung 40 der Fig. 8 ist ferner mit einer Dreheinrichtung 68 (vgl. auch Fig. 2) ausgestattet, um die Plattformen 46 gemeinsam um eine vertikale Achse, d.h. in der Fig. 8 senkrecht zur Zeichnungsebene, zu drehen. Die Drehbewegung ist in der Fig. 8A durch einen Pfeil 70 angedeutet. Die Drehung erfolgt um den Zentrierpunkt 62, in welchem sich die Plattformen 46 in der zweiten geschlossenen Stellung 56 (vgl. Fig. 8A und 8B) berühren. Die Dreheinrichtung 68 stellt eine optionale Komponente der Einrichtung 40 dar.

Ferner ist es möglich, dass jede der Plattformen 46 mit einer eigenen Dreheinrichtung 68 ausgestattet ist, vgl. Fig. 3.

Die Dreheinrichtung 68 resultiert z.B. in der oben erwähnten Sequenzierungsfunktion. Die Einrichtung 40 der Fig. 8 ist exemplarisch mit einem einzigen Behälterstapel 12-1 beladen. In der Fig. 8A befindet sich dieser Behälterstapel 12-1 auf der linken oberen Plattform 46. Geht man ferner davon aus, dass die Einrichtung 40 z.B. auf einem FTF 24 montiert ist und dass dieses FTF 24 eine (externe) Handhabungsstation 72 (z.B. einen Kommissionierplatz, eine Packstation, eine Versandstation etc.) nur mit einer Seite, d.h. an einer speziellen Position, anfahren kann, so erleichtert die Drehung der Plattformen 46 den Zugriff auf die Behälterstapel 12. Dieser Zugriff ist in der Fig. 8B durch einen Doppelpfeil 71 verdeutlicht. Der Behälterstapel 12-1 befindet sich in der Fig. 8B nach der Drehung 70 auf der rechten unteren Plattform.

Es versteht sich, dass die Drehungen sowohl im Uhrzeigersinn als auch gegen den Uhrzeigersinn erfolgen können. Die Drehrichtung bestimmt sich z.B. durch den kürzesten Weg in eine Transferposition.

Ferner verdeutlichen die Fig. 8A und 8B die Möglichkeit, die Plattformen 46 in einer gewünschten Reihenfolge gegenüber der Handhabungsstation 72 zu präsentieren (immer davon ausgehend, dass die Handhabungsstation 72 nur auf die untere rechte Plattform 46 zugreifen kann). Um auf jede der vier Plattformen 46 zugreifen zu können, ist die Dreheinrichtung 68 vorzugsweise in 90°-Schritten drehbar.

Wenn jede der Plattformen 46 mit einer eigenen Dreheinrichtung 68 ausgestattet ist, erfolgt die Drehung vorzugsweise um einen geometrischen Mittelpunkt der jeweiligen Flächen 48 der Plattformen 46, wobei die Plattformen 46 sich während der Drehung in der ersten offenen Stellung 54 (vgl. Fig. 4A, 5C und 6B) befinden.

Die Einrichtung 40 kann ferner eine Hubeinrichtung 74 aufweisen, vgl. Fig. 2. Die Hubeinrichtung 74 ist eine optionale Komponente der Einrichtung 40. Die Hubeinrichtung 74 kann die Plattformen 46 der Einrichtung 40 gleichzeitig oder isoliert voneinander in der Höhenrichtung Y bewegen.

Alternativ ist es möglich, jeder der Plattformen 46 mit einer eigenen Hubeinrichtung 74 auszustatten, vgl. Fig. 3.

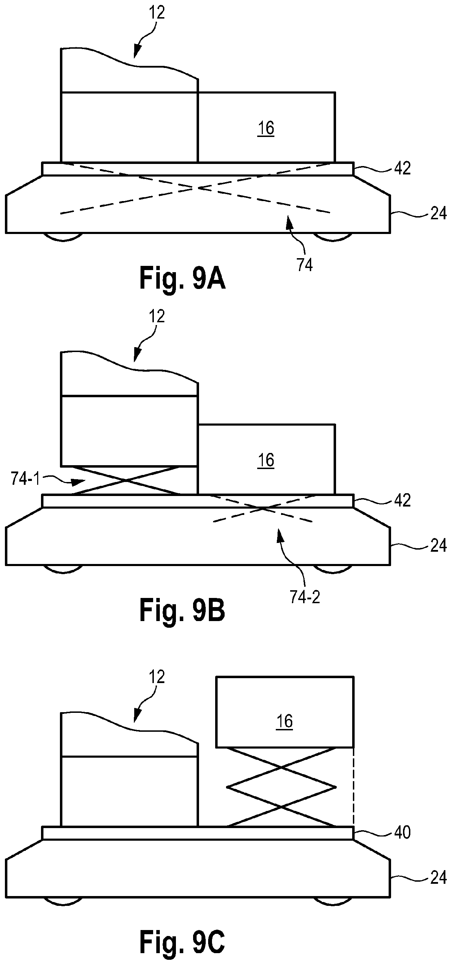

Fig. 9 veranschaulicht die Funktionen der Hubeinrichtung 74 exemplarisch für ein FTF 24 in einer Seitenansicht.

Generell ist das FTF 24 in den Fig. 9A bis 9C links mit einem Behälterstapel 12 und rechts mit einem einzelnen Behälter 16 beladen.

Fig. 9A veranschaulicht eine Hubeinrichtung 74, die Teil der Einrichtung 40 ist. Die Hubeinrichtung 74 ist in der Fig. 9A in einer abgesenkten Normalstellung gezeigt.

Die Fig. 9B veranschaulicht eine Variante, bei der jede Plattform 46 mit einer eigenen Hubeinrichtung 74 ausgestattet ist, vgl. Fig. 3. In der Fig. 9B ist eine erste Hubeinrichtung 74-1 in einer angehobenen Stellung gezeigt, wohingegen die Hubeinrichtung 74-2, die der Plattform 46 zugeordnet ist, die den Einzelbehälter 16 trägt, in ihrer Normalstellung gezeigt ist.

Die Fig. 9C veranschaulicht wiederum eine Ausgestaltung der Plattformen 46 mit jeweils separater Hubeinrichtung 74, wobei die Plattformen 46 zusätzlich jeweils über einen individuellen Antrieb 52 verfügen, vgl. Fig. 3. In der Fig. 9C ist gezeigt, dass die Plattform 46, die den einzelnen Behälter 16 trägt, seitlich nach (rechts) außen in die erste geöffnete Stellung 54 verfahren ist und gleichzeitig angehoben ist.

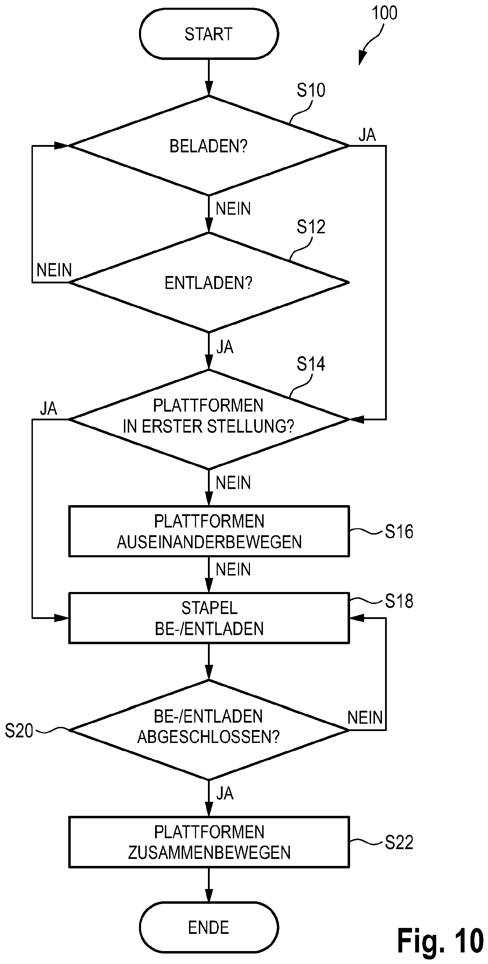

Fig. 10 veranschaulicht ein Flussdiagramm eines Verfahrens 100 zum Beladen und/oder Entladen der Einrichtung 40. Das Verfahren 100 kann durch eine Steuereinrichtung 102, vgl. Fig. 2, durchgeführt werden. Die Steuereinrichtung 102 kann in die Einrichtung 40 integriert sein, wie es in Fig. 2 gezeigt ist. Alternativ kann die Steuereinrichtung auch dezentral zur Einrichtung 40 angeordnet sein. In diesem Fall kommuniziert die Steuereinrichtung 102 über eine Kommunikationsschnittstelle 104 mit der Einrichtung 40, die in diesem Fall die Kommunikationsschnittstelle 104 umfasst, vgl. Fig. 2. Die Steuereinrichtung 102 gibt Signale an den oder die Antriebe 52 aus, die ein Auseinanderfahren oder Zusammenbewegen der Plattformen 46 bewirken. Die Steuereinrichtung 102 kann Signale an die Dreheinrichtung 68 ausgeben, die eine Drehung einzelner oder aller Plattformen 46 bewirkt. Die Steuereinrichtung 102 kann Signale an die Hubeinrichtung 74 ausgeben, die einen Hub einzelner oder aller Plattformen 46 bewirkt.

In einem Schritt S10 der Fig. 10 wird im Verfahren 100 abgefragt, ob die Einrichtung 40 beladen werden soll. Wenn keine Beladung stattfinden soll, kann in einem Schritt S12 (optional) abgefragt werden, ob eine Entladung durchgeführt werden soll. Es versteht sich, dass die Schritte S10 und S12 auch vertauscht werden können. Ferner kann einer der Schritte S10 oder S12 auch vollständig weggelassen werden.

Die Abfragen der Schritte S10 und S12 werden mit "Ja" beantwortet, wenn z.B. ein (nicht dargestellter) Lagerverwaltungsrechner einen entsprechenden Beladungsauftrag und/oder einen Entladungsauftrag an die Steuereinrichtung 102 ausgibt. Diese Aufträge können durch Kommissionieraufträge ausgelöst werden.

Wenn eine der beiden Abfragen der Schritte S10 und S12 bejaht wird, wird in einem Schritt S14 abgefragt, ob sich die entsprechenden Plattformen 46 (bereits) in der ersten geöffneten Stellung 54 befinden. Wenn sich die Plattformen 46 noch nicht in der ersten Stellung 54 befinden, werden die Plattformen 46 in einem Schritt S16 auseinanderbewegt, vgl. z.B. Fig. 5 oder 6. Wenn sich die Plattformen 46 bereits in der ersten Stellung 54 befinden, kann der Schritt S16 ausgelassen werden und es kann direkt zu einem Schritt S18 fortgeschritten werden.

Im Schritt S18 werden die Behälterstapel 12, oder alternativ auch einzelne Behälter 16, auf die entsprechenden Plattformen 46 geladen oder von den Plattformen 46 entladen gemäß dem Be/Enladungsauftrag.

Das Beladen und Entladen erfolgt mittels des automatisierten Stapel-Lastaufnahmemittels 22 des Roboters 20, vgl. Fig. 1. Bei einem Beladevorgang bewegt der Roboter das Stapel-Lastaufnahmemittel 22 im Bereich des Bodenlagers 14 im angehobenen Zustand über den gewünschten Behälter 16, senkt das Stapel-Lastaufnahmemittel 22 mit Hilfe des Mastes 34 vertikal über den gewünschten Behälterstapel 12 ab, so dass das Stapel-Lastaufnahmemittel 22 außen um den gewünschten Behälterstapel 12 positioniert ist, vgl. Fig. 4A für die obere rechte Plattform 46. Anschließend wird das Stapel-Lastaufnahmemittel 22 aktiviert, so dass der gewünschte Behälterstapel 12 gegriffen wird, um anschließend senkrecht angehoben zu werden. Im angehobenen Zustand kann das Stapel-Lastaufnahmemittel 22 dann über die vorgegebene Plattform 46 durch horizontale Bewegungen positioniert werden. Anschließend wird das Stapel-Lastaufnahmemittel 22 wieder vertikal abgesenkt, bis der gegriffene Stapel 12 auf der gewünschten Plattform 46 abgesetzt ist. Danach wird der Griff gelöst und das Stapel-Lastaufnahmemittel 22 wieder senkrecht angehoben.

Bei einem Entladevorgang erfolgen die oben beschriebenen Schritte in umgekehrter Reihenfolge.

Die Beladevorgänge und Entladevorgänge können beliebig oft wiederholt werden, bis jede der Plattformen 46 der Einrichtung 40 auftragsgemäß beladen und/oder entladen wurde. Das Ende der Beladung und/oder Entladung wird in einem Schritt S20 abgefragt. Wenn die Beladung und/oder Entladung noch nicht abgeschlossen ist, kehrt man zum Schritt S18 oder alternativ zum Schritt S10 (nicht dargestellt) zurück. Wenn die Beladung und/oder Entladung abgeschlossen ist, werden die Plattformen 46 in einem Schritt S22 in die zweite geschlossene Stellung 56 zusammenbewegt.

Das Auseinanderbewegen des Schritts S16 und das Zusammenbewegen des Schritts S22 wird durch die Steuereinrichtung 102 veranlasst, die den oder die Antriebe 52 entsprechend ansteuert.

Es versteht sich, dass die hier beschriebenen Beladungsvorgänge und Entladungsvorgänge analog auf das Drehen mittels der Dreheinrichtung 68 und/oder das Anheben mittels der Hubeinrichtung 74 anwendbar sind.

Das Verfahren 100 der Fig. 10 ist auch in der Fig. 1 veranschaulicht. In der Fig. 1 ist die Einrichtung 40 des ersten FTF 24-1 in der ersten geöffneten Stellung 54 gezeigt, wo die vier Plattformen 46 maximal zueinander beabstandet sind und unbeladen sind.

Die Einrichtung 40 des zweiten FTF 24-2 ist in Fig. 1 teilweise beladen. Drei der vier Plattformen 46 sind bereits jeweils mit einem Behälterstapel 12 beladen. Der Roboter 20 ist gerade dabei, einen weiteren Behälterstapel 12 aus dem Bodenlager 14 zu greifen, um diesen Behälterstapel 12 auf die letzte freie Plattform 46 des zweiten FTF 24-2 abzusetzen. Die Plattformen 46 der Einrichtung 40 des zweiten FTF 24-2 sind ebenfalls in der ersten offenen Stellung 54 gezeigt.

Das dritte FTF 24-2 ist bereits vollständig mit vier Behälterstapeln beladen. Die Behälterstapel 12 sind dicht gepackt. Die Plattformen 46 der Einrichtung 40 des dritten FTF 24-3 befinden sich in der zweiten geschlossenen Stellung 56, so dass die geladenen Behälterstapel 12 abstandsfrei auf der Oberseite des FTF 24-3 positioniert sind. Die geladenen Stapel 12 berühren sich vorzugsweise gegenseitig. In dieser dichten Anordnung stabilisieren sich die geladenen Behälterstapel 12 gegenseitig, so dass das FTF 24-3 entweder mit einer höheren Geschwindigkeit als üblich durch das System 10 bewegt werden kann oder mit höheren Behälterstapeln 12 bei gleichbleibender Geschwindigkeit durch das System 10 bewegt werden kann, wie oben bereits erläutert.

Es versteht sich, dass die FTF 24 in der Fig. 1 gegen einen stationären Stetigförderer (nicht gezeigt) ausgetauscht werden können, der insbesondere dem gleichen Transportweg 26 folgt. In diesem Fall können die Einrichtungen 40 als eigenständige Ladungsträger, ähnlich wie Tablare in konventionellen Förderanlagen, eingesetzt werden. Diese Einrichtungen 40 können dann über die Stetigförderer zu gewünschten Zielorten transportiert werden.

Des Weiteren ist es möglich, in der Fig. 1 die Einrichtungen 40 stationär im Bodenlager 14 einzusetzen. In diesem Fall ist es möglich, den Volumennutzungsgrad im Bodenlager 14 zu erhöhen. Die Einrichtungen 40, die dann am Boden des Bodenlagers 14 positioniert, und insbesondere fixiert, sind, können wiederum zwischen der ersten Stellung 54 und der zweiten Stellung 56 hin- und her bewegt werden, so dass eine Verdichtung im Bereich des Lagers stattfindet. Im Normalzustand stehen die Behälterstapel 12 in dem Bodenlager 14, das mit den Einrichtungen 40 ausgestattet ist, dicht an dicht, d.h. die Behälterstapel 12 berühren sich. Wenn auf einen der Behälterstapel 12 im Bodenlager 14 zugegriffen werden muss, wird die entsprechende Einrichtung 40 und ggf. benachbarte Einrichtungen 40 aktiviert, um zumindest diesen Behälterstapel 12 für das Stapel-Lastaufnahmemittel 22 des Roboters 20 zugänglich zu machen, indem zumindest der gewünschte Behälterstapel 12 zu den benachbarten Behälterstapeln 12 beabstandet wird durch ein Auseinanderfahren der Plattformen 46.

Werden Transporteinheiten auf einem FTF gebildet, die im Wesentlichen einen Kubus bilden und einem (Teil-)Auftrag eines Kunden entsprechen, könnten Verpackungen in Form von Wickel- oder Haubenstretchfolien, oder nur Verbindungsmittel, wie z.B. Umreifungen, um die Ladung (Kubus) angebracht werden, so dass eine palettenlose Transporteinheit entsteht.

Sind die Plattformen 46, insbesondere geringfügig, kleiner als die Grundfläche der Behälter 16, können diese so weit zusammenfahren, dass unterhalb des Behälterturms umlaufend eine Anlagefläche für elastisches Verpackungsmaterial entsteht oder an diesen Flächen externe Lastaufnahmemittel zur Ladungsabnahme angreifen können.

Sind die Plattformen 46 mit Förderern ausgerüstet, können im System 10 der Fig. 1 stationäre Einrichtungen zur teilweisen oder vollständigen Bildung der Gesamtladung verwendet werden und mittels der Förderer diese an die FTF geschlossen übergeben werden.

Die Fig. 14 zeigt weitere Varianten einer Einrichtung 40.

Die Einrichtung 40 der Fig. 14A weist fünf Plattformen 46 aufweist. Drei der Plattformen 46-1 bis 46-3 sind gleich groß. Die restlichen beiden Plattformen 46-4 und 46-5 sind nur halb so groß wie die anderen drei, weisen aber zusammen die gleiche Grundfläche wie die anderen drei auf. Fig. 14A zeigt die geschlossene Stellung (2. Stellung) der Plattformen 46. Es versteht sich, dass die Plattformen 46-4 und 46-5 zusammen mit einem Stapel von Gegenständen der Größe der Plattformen 46-1 bis 46-3, oder mit zwei Stapeln von Gegenständen der Größe der Plattformen 46-4 und 46-5, belegt werden könnten. Umgekehrtes gilt für die Plattformen 46-1 bis 46-3.

Fig. 14B zeigt eine weitere Variante einer Einrichtung 40, die z.B. acht gleich dimensionierte Plattformen 46-1 bis 46-8 aufweist. Fig. 14B veranschaulicht verschiedene offene Stellungen (1. Stellungen).

Die Plattformen 46-1 und 46-2 bilden ein Paar. Die Plattformen 46-3 und 46-4 bilden ein Paar. Die Plattformen 46-5 und 46-6 bilden ein Paar. Die Plattformen 46-7 und 46-8 bilden ein Paar. Die Plattformen 46 können als Paare (gemeinsam im Verbund) auseinander bewegt werden (vgl. z.B. Fig. 4A und Fig. 5C). Ferner können die Paare selbst noch einmal auseinander bewegt werden, wie es für die Plattformen 46-7 und 46-8 gezeigt ist. Es versteht sich, dass auch die anderen Paare ebenfalls noch einmal auseinander bewegt werden können, wie es in der Fig. 14B durch Strichlinien angedeutet ist. Fig. 14B veranschaulicht also verschiedene erste, offene Stellungen der Plattformen 46.

### Bezugszeichenlisten

- 10: (Lager- und Kommissionier-)System
- 12: (Behälter-) Stapel
- 14: Bodenlager
- 16: (Einzel-)Behälter
- 18: Fördertechnik
- 20: (Handhabungs-)Roboter
- 22: Stapel-LAM
- 24: Fahrerloses Transportfahrzeug (FTF)
- 26: Transportweg
- 28: Portal/Gestell
- 30: Tragbalken
- 32: Schlitten
- 34: Mast
- 40: Einrichtung
- 42: Rahmen
- 44: Vielzahl von 46
- 46: (LAM-)Plattformen
- 48: Fläche von 46
- 50: Abmessung von 48
- 52: Antrieb
- 54: 1. Stellung
- 56: 2. Stellung
- 58: Grundfläche von 12 und 16
- 60: Bewegung von 46
- 62: Zentrierpunkt
- 64: Führungseinrichtung
- 66: Schiene
- 68: Dreheinrichtung
- 70: Drehbewegung
- 72: Handhabungsstation
- 74: Hubeinrichtung
- 76: Förderer
- 100: Verfahren zu Be-/Entladen
- 102: Steuereinrichtung
- 104: Kommunikationsschnittstelle
- 76: Förderer
- 100: Verfahren zu Be-/Entladen
- 102: Steuereinrichtung
- 104: Kommunikationsschnittstelle

## Patentansprüche

1. Lager- und Kommissioniersystem (10) mit:
einem Bodenlager (14) zur Lagerung von Stapeln (12), die aus vertikal übereinander gestapelten Gegenständen gebildet sind und die nebeneinander gelagert werden;
einem Roboter (20), der ein Stapel-Lastaufnahmemittel (22) aufweist, das die Stapel (16) zum Umsetzen von außen greift;
**gekennzeichnet durch**: eine
Fördertechnik (18), die ein fahrerloses Transportfahrzeug (24) umfasst; und
mindestens einer Einrichtung (40), die auf der Fördertechnik (18) eingesetzt wird, um mehrere der Stapel (16) gleichzeitig dicht zu lagern und/oder gleichzeitig stabil zu transportieren;
wobei die Einrichtung (40) zur gleichzeitigen Aufnahme mehrerer der Stapel (12), die nebeneinander angeordnet sind, eingerichtet ist, wobei jeder der Stapel (12) aus einer Vielzahl der Gegenstände besteht, die vertikal aufeinander stapelbar sind, und wobei die Einrichtung (40) aufweist:
einen Rahmen (42); und
eine Vielzahl (44) von Lastaufnahme-Plattformen (46);
wobei jede der Plattformen (46) eingerichtet ist, genau einen der Stapel (12) aufzunehmen, und mit dem Rahmen (42) verbunden ist, so dass die Vielzahl (44) der Plattformen (46) zwischen einer ersten offenen Stellung zur Be- und Entladung und einer zweiten geschlossenen Stellung zum Transport bewegbar ist; und
wobei das fahrerlose Transportfahrzeug (24) die Einrichtung (40) aufweist, die auf einer Oberseite des Transportfahrzeugs (24) angeordnet ist.

2. Lager- und Kommissioniersystem (10) nach Anspruch 1, wobei:
die Plattformen (46) in der ersten offenen Stellung so horizontal zueinander beabstandet sind, dass ein automatisiertes Stapel-Lastaufnahmemittel (22), das eingerichtet ist, die Stapel (12) von außen zu greifen, kollisionsfrei zwischen die auf den Plattformen (46) angeordneten Stapel (12) bewegbar ist; und
die Plattformen (46) in der zweiten geschlossenen Stellung so horizontal zueinander angeordnet sind, dass die auf den Plattformen (46) angeordneten Stapel (12) im Wesentlichen abstandsfrei angeordnet sind.

3. Lager- und Kommissioniersystem (10) nach Anspruch 1 oder 2, wobei die Einrichtung ferner mindestens einen Antrieb (52) aufweist, der eingerichtet ist, zumindest eine der Plattformen (46) zwischen der ersten Stellung (54) und der zweiten Stellung (56) zu bewegen.

4. Lager- und Kommissioniersystem (10) nach einem der vorhergehenden Ansprüche, wobei der Rahmen (42) eine Führungseinrichtung (64) für die Plattformen (46) aufweist, um die Plattformen (46) entlang fest vorgegebener Bewegungswege (60) zwischen der ersten und zweiten Stellung (54, 56) zu bewegen.

5. Lager- und Kommissioniersystem (10) nach einem der vorhergehenden Ansprüche, wobei die Einrichtung (40) ferner eine Hubeinrichtung (74) aufweist, die eingerichtet ist, einzelne oder jede der Plattformen (46) vertikal zu bewegen.

6. Lager- und Kommissioniersystem (10) nach einem der vorhergehenden Ansprüche, wobei einzelne oder jede der Plattformen (46) einen Förderer (76) integriert hat.

7. Lager- und Kommissioniersystem (10) nach einem der vorhergehenden Ansprüche, wobei die Einrichtung (40) ferner eine Dreheinrichtung (68) aufweist, um einzelne der Plattformen (46) oder alle Plattformen (46) gemeinsam, um eine vertikale Achse zu drehen.

8. Lager- und Kommissioniersystem (10) nach einem der vorhergehenden Ansprüche, wobei eine Fläche (48) von jeder der Plattformen (46) im Wesentlichen gleich groß wie eine Grundfläche (52) von einem einzigen der Stapel (12) ist.

9. Lager- und Kommissioniersystem (10) nach einem der vorhergehenden Ansprüche, wobei die Einrichtung (40) genau vier Plattformen (46) umfasst.

10. Verfahren (100) zum Entladen von Stapeln (16) von einer Einrichtung (40), die zur gleichzeitigen Aufnahme mehrerer Stapel (12), die nebeneinander angeordnet sind, eingerichtet ist, wobei jeder der Stapel (12) aus einer Vielzahl von stapelbaren Gegenständen besteht, die vertikal aufeinander stapelbar sind, und die aufweist: einen Rahmen (42);
**dadurch gekennzeichnet, dass** die Einrichtung (40) weiterhin aufweist:
eine Vielzahl (44) von Lastaufnahme-Plattformen (46); wobei jede der Plattformen (46) eingerichtet ist, genau einen der Stapel (12) aufzunehmen, und mit dem Rahmen (42) verbunden ist, so dass die Vielzahl (44) der Plattformen (46) zwischen einer ersten offenen Stellung zur Be- und Entladung und einer zweiten geschlossenen Stellung zum Transport bewegbar ist, wobei das Verfahren den Schritt aufweist:
Zusammenbewegen (S22) der Plattformen (46) in die zweite geschlossene Stellung (56), um die Stapel (16) mittels eines automatisierten Stapel-Lastaufnahmemittels (22), das die Stapel (16) von außen greift, von den Plattformen aufzunehmen.

## Claims

1. A storage and order-picking system (10) including:
a floor storage (14) for storing stacks (12), which are formed by objects stacked vertically on top of each other and which are stored side by side;
a robot (20) comprising a stack load-handling device (22) gripping the stacks (16) from the outside for transfer;
**characterized by**:
a conveyor system (18) including a driverless transport vehicle (24); and
at least one device (40), which is used on the conveyor system (18) for densely storing and/or simultaneously transporting in a stable manner several ones of the stacks (16);
wherein the device (40) is configured to simultaneously receive several ones of the stacks (12), which are arranged side by side, wherein each of the stacks (12) consists of a plurality of the objects, which are stackable vertically on top of each other, and wherein the device (40) comprises:
a frame (42); and
a plurality (44) of load-handling platforms (46);
wherein each of the platforms (46) is configured to receive exactly one of the stacks (12), and is connected to the frame (42) such that the plurality (44) of the platforms (46) is movable between a first open position for loading and unloading and a second closed position for transport; and
wherein the driverless transport vehicle (24) comprises the device (40) arranged on an upper surface of the transport vehicle (24).

2. The storage and order-picking system (10) of claim 1, wherein:
the platforms (46) are horizontally spaced to each other in the first open position such that an automatic stack load-handling device (22), which is configured to grip the stacks (12) from the outside, is movable collision-free between the stacks (12) arranged on the platforms (46); and
the platforms (46) are arranged, in the second closed position, horizontally to each other such that the stacks (12) arranged on the platforms (46) are substantially arranged in a distance-free manner.

3. The storage and order-picking system (10) of claim 1 or 2, wherein the device further comprises at least one drive (52) configured to move at least one of the platforms (46) between the first position (54) and the second position (56).

4. The storage and order-picking system (10) of any of the proceeding claims, wherein the frame (42) comprises a guiding device (64) for the platforms (46) for moving the platforms (46) along fixed predetermined movement paths (60) between the first and second positions (54, 56).

5. The storage and order-picking system (10) of any of the proceeding claims, wherein the device (40) further comprises a lifting device (74) configured to move individual ones or each of the platforms (46) vertically.

6. The storage and order-picking system (10) of any of the proceeding claims, wherein a conveyor (76) is integrated into individual ones or each of the platforms (46).

7. The storage and order-picking system (10) of any of the proceeding claims, wherein the device (40) further comprises a rotating device (68) for rotating individual ones of the platforms (46) or all of the platforms (46) in common about a vertical axis.

8. The storage and order-picking system (10) of any of the proceeding claims, wherein an area (48) of each of the platforms (46) substantially has the same size as a surface area (52) of one single one of the stacks (12).

9. The storage and order-picking system (10) of any of the proceeding claims, wherein the device (40) includes exactly four platforms (46).

10. A method (100) for unloading stacks (16) from a device (40) configured to simultaneously receive several stacks (12), which are arranged side by side, wherein each of the stacks (12) consists of a plurality of stackable objects which are stackable vertically on top of each other, and comprising: a frame (42);
**characterized in that** the device (40) further comprises:
a plurality (44) of load-handling platforms (46); wherein each of the platforms (46) is configured to receive exactly one of the stacks (12), and is connected to the frame (42) such that the plurality (44) of the platforms (46) is movable between a first open position for loading and unloading and a second closed position for transport, wherein the method comprises the step:
moving together (S22) the platforms (46) into the second closed position (56) for receiving, by means of an automatic stack-load handling device (22), which grips the stacks (16) from the outside, the stacks (16).

## Revendications

1. Système (10) de stockage et de préparation de commandes comprenant :
un stockage au sol (14) pour stocker des piles (12) formées d'objets empilés verticalement les uns sur les autres et stockés côte à côte ;
un robot (20) qui présente un moyen (22) de levage de charges empilées qui saisit les piles (16) pour les déplacer depuis l'extérieur ;
**caractérisé par** : un système de convoyage (18) comprenant un véhicule de transport sans conducteur (24) ; et
au moins un dispositif (40) qui est utilisé sur le système de convoyage (18) pour stocker simultanément plusieurs des piles (16) de manière dense et/ou pour les transporter simultanément de manière stable ;
ledit dispositif (40) étant adapté pour recevoir simultanément plusieurs desdites piles (12) disposées côte à côte, chacune desdites piles (12) étant constituée d'une pluralité desdits articles empilables verticalement les uns sur les autres, et ledit dispositif (40) comprenant :
un châssis (42) ; et
une pluralité (44) de plates-formes (46) de réception de charge ;
chacune des plates-formes (46) étant adaptée pour recevoir exactement l'une des piles (12) et étant reliée au châssis (42), de sorte que la pluralité (44) de plates-formes (46) est mobile entre une première position d'ouverture pour le chargement et le déchargement et une deuxième position de fermeture pour le transport ; et
dans lequel le véhicule de transport sans conducteur (24) comprend le dispositif (40) qui est disposé sur un côté supérieur du véhicule de transport (24).

2. Système (10) de stockage et de préparation de commandes selon la revendication 1, dans lequel :
les plates-formes (46) sont espacées horizontalement les unes des autres dans la première position d'ouverture de telle sorte qu'un moyen automatisé (22) de levage de charges empilées, qui est agencé pour saisir les piles (12) de l'extérieur, est apte à être déplacé sans collision entre les piles (12) disposées sur les plates-formes (46) ; et
les plates-formes (46) sont disposées horizontalement les unes par rapport aux autres dans la deuxième position de fermeture de telle sorte que les piles (12) disposées sur les plates-formes (46) sont disposées sensiblement sans aucun espacement.

3. Système (10) de stockage et de préparation de commandes selon la revendication 1 ou 2, dans lequel le dispositif comprend en outre au moins un entraînement (52) agencé pour déplacer au moins une des plateformes (46) entre la première position (54) et la deuxième position (56).

4. Système (10) de stockage et de préparation de commandes selon l'une des revendications précédentes, dans lequel le châssis (42) comporte un dispositif de guidage (64) des plateformes (46) pour déplacer les plateformes (46) le long de trajectoires (60) prédéterminées de manière fixe entre la première et la deuxième position (54, 56).

5. Système (10) de stockage et de préparation de commandes selon l'une quelconque des revendications précédentes, dans lequel le dispositif (40) comprend en outre un dispositif de levage (74) agencé pour déplacer verticalement l'une, ou chacune, des plates-formes (46).

6. Système (10) de stockage et de préparation de commandes selon l'une des revendications précédentes, dans lequel l'une ou chacune des plateformes (46) intègre un convoyeur (76).

7. Système (10) de stockage et de préparation de commandes selon l'une des revendications précédentes, dans lequel le dispositif (40) comprend en outre des moyens de rotation (68) pour faire tourner certaines des plateformes (46), ou toutes les plateformes (46) ensemble, autour d'un axe vertical.

8. Système (10) de stockage et de préparation de commandes selon l'une quelconque des revendications précédentes, dans lequel une surface (48) de chacune des plates-formes (46) est sensiblement égale à une surface de base (52) d'une seule des piles (12).

9. Système (10) de stockage et de préparation de commandes selon l'une quelconque des revendications précédentes, dans lequel le dispositif (40) comprend exactement quatre plates-formes (46).

10. Procédé (100) de déchargement de piles (16) d'un dispositif (40) agencé pour recevoir simultanément plusieurs piles (12) disposées côte à côte, chacune des piles (12) étant constituée d'une pluralité d'objets empilables qui peuvent être empilés verticalement les uns sur les autres, et comprenant : un châssis (42) ;
**caractérisé en ce que** le dispositif (40) comprend en outre :
une pluralité (44) de plates-formes (46) de réception de charge ; chacune des plates-formes (46) étant adaptée pour recevoir exactement l'une des piles (12) et étant reliée au châssis (42) de sorte que la pluralité (44) de plates-formes (46) est mobile entre une première position d'ouverture pour le chargement et le déchargement et une deuxième position de fermeture pour le transport, le procédé comprenant l'étape consistant à :
déplacer (S22) les plates-formes (46) ensemble vers la deuxième position de fermeture (56) pour prélever les piles (16) des plates-formes au moyen d'un dispositif automatisé (22) de levage de charges empilées qui saisit les piles (16) de l'extérieur.
